Europäisches Patentamt

European Patent Office

Office européen des brevets

(11) Veröffentlichungsnummer: **0 353 340**
**A1**

(12) **EUROPÄISCHE PATENTANMELDUNG**

(21) Anmeldenummer: 88115055.1

(51) Int. Cl.4: **B01D 33/04 , B01D 29/09**

(22) Anmeldetag: **15.09.88**

(30) Priorität: **02.07.88 DE 3822485**
**26.08.88 EP 88710023**

(43) Veröffentlichungstag der Anmeldung:
**07.02.90 Patentblatt 90/06**

(84) Benannte Vertragsstaaten:
**AT CH DE FR GB IT LI SE**

(71) Anmelder: **KNOLL MASCHINENBAU GMBH**
**Schwarzachstrasse 20**
**D-7968 Saulgau(DE)**

(72) Erfinder: **Knoll, Walter**
**Walserweg 18**
**D-7968 Saulgau(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) Filteranlage zur Reinigung von Kühlschmiermitteln.

(57) Es wird eine Filteranlage zur Reinigung von Kühlschmiermitteln vorgeschlagen, die in äußerst kompakter Bauweise aufgebaut ist. Um bei kleinstem Flächenbedarf eine hohe Durchgangsleistung und damit einen guten Wirkungsgrad zu erzielen, ist der Siebboden (3) diagonal durch den Flüssigkeitsbehälter (2) geführt. Die gute Filterwirkung wird durch einen hohen Flüssigkeitsspiegel oberhalb des Siebbodens im unteren Bereich bewirkt (hierzu Zeichnung).

Fig 1

## Filteranlage zur Reinigung von Kühlschmiermitteln

Die Erfindung betrifft eine Filteranlage zur Reinigung von Kühlschmiermitteln nach dem Oberbegriff des Anspruchs 1.

Bei der spanabhebenden Bearbeitung bzw. beim Schleifen werden Kühlschmiermittel, d. h. Emulsionen oder Öle zur Kühlung, Schmierung und zum Abtransport von Abrieb, Späne usw. verwendet. Zur Reinigung von Kühlschmierflüssigkeiten sind Bandfilteranlagen bekanntgeworden, die als Filtermaterial Filtervlies verwenden, welches auf einem umlaufenden Trägerband transportiert wird. Die Filterwirkung wird sowohl durch das Filtervlies als auch durch den darauf liegenden Filterkuchen bewirkt. Um einen ausreichenden Durchsatz der Flüssigkeit durch den Filterkuchen und dem Filtervlies zu gewährleisten, darf der Filterkuchen nicht zu dick werden. Das Filtervlies einschließlich des darauf liegenden Filterkuchens wird deshalb langsam am Austragsende der Filteranlage ausgetragen und neues Filtervlies im Einlaufbereich des Vlieses nachgezogen.

Normale Schwerkraft-Filteranlagen weisen eine Flüssigkeitsspiegelhöhe von ca. 10 bis 20 cm auf. Zur Erhöhung des Durchsatzes der Kühlschmierflüssigkeit werden Vakuumbandfilter oder Saugbandfilter verwendet, mit einem Unterdruck unterhalb des Filtervlieses.

Übliche Schwerkraftfilteranlagen oder Vakuumbandfilteranlagen sind trogförmig aufgebaut mit einem weitgehend ebenen Siebboden auf dem das Filtervlies aufliegt und der Filterkuchen sich darauf ablagert. Das Filtervlies einschließlich dem darauf abgelagerten Filterkuchen wird am Ende des Flüssigkeitsbehälters über eine Schräge nach außen abtransportiert, wobei der Neigungswinkel der Schräge weitgehend dadurch bestimmt ist, daß der Filterkuchen nicht vom Filtervlies wieder heruntergleitet (US 3 078 620).

Aus der US-4 145 288 ist eine Filterbandanlage bekanntgeworden, bei welcher der trogförmige Flüssigkeitsbehälter nicht eben, sondern über seinen gesamten Boden als Schräge ausgebildet ist, wobei das Filtervlies von einem umlaufenden Transportband transportiert wird. Eine ähnliche Einrichtung ist aus US 3 091 366 bekanntgeworden, bei welcher eine auf dem Vlies aufliegende Transportkette zur Unterstützung des Schlammaustrags wirkt.

Bei der Filteranlage gemäß dem deutschen Gebrauchsmuster 81 35 658 wird auf ein umlaufendes Transportband bzw. eine umlaufende Transporteinrichtung für das Filtervlies gänzlich verzichtet. Das Filtervlies wird über eine untere Umlenkrolle im Bereich des Bodens der Filteranlage über ein diagonal durch den Flüssigkeitsbehälter verlaufendes schräges Lochsieb zu einer oberen, motorisch angetriebenen Umlenkwalze gezogen und über eine darunter liegende Andruckwalze in den Schlammkasten transportiert. Diese Einrichtung hat den Vorteil, daß gänzlich auf zusätzliche, umlaufende Transportmittel wie Transportband bzw. Kratzerketten verzichtet werden kann. Bei dieser Filteranlage ist es jedoch nicht gewährleistet, daß das Filtervlies überall auf dem Siebboden sicher aufliegt. Außerdem ist die Ausnutzung des Filtervlieses nicht optimal.

Der Erfindung liegt die Aufgabe zugrunde, eine Filteranlage zu schaffen, die in ihrer Wirkungsweise gegenüber den bekannten Filteranlagen noch weiter optimiert ist. Der Erfindung liegt dabei insbesondere die Aufgabe zugrunde, eine äußerst kompakte Filteranlage zu schaffen, die auf einem räumlich sehr engen Bereich eine hohe Leistungsfähigkeit und einen hohen Wirkungsgrad aufweist.

Diese Aufgabe wird ausgehend von einer Filteranlage gemäß dem Oberbegriff des Anspruchs 1 erfindungsgemäß durch die kennzeichnenden Teile des Anspruchs 1 gelöst.

In den Unteransprüchen sind vorteilhafte Weiterbildungen und Ausgestaltungen der Filteranlage nach Anspruch 1 angegeben.

Die Unteransprüche 9 und 11 stellen selbständige Alternativlösung der erfindungsgemäßen Aufgabe dar.

Der Erfindung liegt der Kerngedanke zugrunde, daß die Filterleistung u. a. auch durch die hydrostatische Wirkung der Kühlschmierflüssigkeit erzielt werden kann. So ist es in der erfindungsgemäßen Filteranlage vorgesehen, daß ein relativ hoher Flüssigkeitsspiegel oberhalb des Filtervlieses bzw. Filterkuchens vorhanden ist, wobei der hierdurch entstehende hydrostatische Druck eine ähnliche Wirkung wie eine Vakuumbandfilteranlage oder Saugbandfilteranlage aufweist. Der diesbezügliche technische Aufwand kann demnach eingespart werden.

Um die Baulänge der Filteranlage klein zu halten, ist auch bei der erfindungsgemäßen Filteranlage in an sich bekannter Art der Siebboden zur Auflage des Filtervlieses diagonal durch den Flüssigkeitsbehälter gelegt. Der diagonal bzw. schräg verlaufende Lochsiebboden oder Spaltsiebboden trennt demnach den oberen Schmutzwasserbereich von dem unteren Reinwasserbereich. Durch die relativ steile Winkeleinstellung von vorzugsweise ca. 40° des Siebbodens, der gleichzeitig Austragsschräge für das Filtervlies ist, kann eine außerordentlich kurze Baulänge der Filteranlage erzielt werden, bei gleichem Wirkungsgrad wie bei einer normalen Schwerkraftfilteranlage. Durch den hohen hydrostatischen Druck auf den Filterkuchen bzw.

das Filtervlies infolge der verhältnismäßig hohen Wasserstandshöhe oberhalb des Filtervlieses von ca. 50 cm wird der Durchsatz des Schmutzwassers erhöht. Hierdurch kann, ähnlich wie bei einem Vakuumbandfilter, der Filterkuchen wesentlich dicker aufgetragen werden, was die Filterwirkung verbessert. Durch die Möglichkeit einer höheren Filterkuchenschicht wird jedoch auch der Verbrauch des Filtervlieses stark reduziert, was zu einer erheblichen Kosteneinsparung führt. Durch den hohen hydrostatischen Druck kann demnach mit einer geringeren Fläche ein wesentlich größerer Durchsatz an Schmutzflüssigkeit als bei einer größeren normalen Schwerkraftanlage erzielt werden.

Die Einsparung einer separaten umlaufenden Fördereinrichtung für das Filtervlies wird durch die erfindungsgemäße Antriebseinheit erzielt. Hierfür wird die im Austragsbereich angeordnete Umlenkrolle von einer darunter liegenden Anpreßwalze angetrieben, so daß zum einen eine starke Umschlingung des Filtervlieses um die Umlenkwalze, zum anderen durch den Antrieb der unteren Andruckwalze ein stetiger Zug auf das Filtervlies gegeben ist.

Hierbei ist es vorteilhaft, daß die angetriebene Andruckwalze einzelne profilierte Antriebsrollen aufweist, die einen hohen Anpreßdruck auf die Umlenkwalze ausüben. Die Führung für das Filtervlies zwischen den Antriebsrollen übernehmen Stützscheiben. Bei einer sehr breiten Umlenkwalze können auch noch ein oder mehrere zusätzliche Antriebsrollen vorgesehen sein.

Die Umlenkwalze und die Antriebsrollen sind an ihrer Oberfläche profiliert ausgebildet, wobei die Umlenkwalze als geriffelte Stahl-Umlenkwalze und die Antriebsrollen aus profilierten, ölresistenten Gummirollen bestehen. Die Profilierung der Antriebsrollen erfolgt dabei taschenförmig in axialer oder Längsrichtung, wobei die Taschen durch ein konisches Profil selbstreinigend ausgebildet sind. Ein separater Abstreifer an der oberen Umlenkwalze entfernt weitgehend den Filterkuchen auf dem Filtervlies, bevor er zwischen Umlenkwalze und Antriebsrollen gelangt.

Vorteilhaft ist weiterhin, daß die untere, angetriebene Antriebswalze über ein Hebelsystem mit Zugfeder gegen die obere Umlenkwalze gedrückt wird. Dabei können die beiden Walzen mittels eines zusätzlichen Exzenterhebels, der an dem Hebelsystem angreift, auseinandergedrückt werden, um das Filtervlies bei einer Neubeschickung einlegen zu können.

Die Weiterbildung der Erfindung sieht vor, daß das Filtervlies im Eingangsbereich der Filteranlage durch ein Einschubblech mit daran befestigter ersten Umlenkwalze in seine untere Position positioniert wird. Am unteren Beginn des Siebbodens wird das Vlies, von der ersten Umlenkwalze kommend, über eine Auflagekante auf den Siebboden aufgelegt, um eine straffe Verlegung zu gewährleisten. Eine zusätzliche Dichtlippe dient zur Abdichtung und Führung des Filtervlieses.

Bei der kompakten Bauweise der erfindungsgemäßen hydrostatischen Filteranlage ist es von großer Wichtigkeit, daß in dem Schmutzwasserbecken keine Turbulenzen entstehen, die den abgesetzten Filterkuchen wieder aufwirbeln können. Ein spezieller Einlaufkasten zur Abbremsung der hohen Einlaufgeschwindigkeit des Schmutzwassers, welches mit 2 bis 4 m/s einströmt, dient der gezielten Führung des einlaufenden Schmutzwassers. Dabei ist es wesentlich, daß das mit hoher Geschwindigkeit einlaufende Schmutzwasser in den Einlaufkasten durch Umlenkbleche abgebremst und die Geschwindigkeit verlangsamt wird. Der Auslaufstutzen des Einlaufkastens ist erfindungsgemäß gegen ein Prallblech im Einlaufbereich gerichtet, wo es weiterhin abgebremst und die Strömungsrichtung in Austragsrichtung umgekehrt wird. Es herrscht demnach im gesamten oberen Schmutzwasserbecken eine Strömung in Richtung zum Austrag des Filtervlieses, so daß auch Schwebstoffe spätestens beim Austritt des Filtervlieses aus der Flüssigkeit durch Adhäsionskräfte mitgenommen werden.

Gemäß der alternativen Weiterbildung der Erfindung nach Unteranspruch 9, soll die Filterwirkung nahezu ausschließlich durch den Filterkuchen selbst bewirkt werden. Als Transportmittel für den Filterkuchen kann demnach entweder ein umlaufendes Transportband aus durchlässigem Kunststoff, wie Perlon, Dralon o. dgl., verwendet werden. Dieses endlose Transportband muß jedoch außerhalb des Flüssigkeitsbehälters von den restlichen Bestandteilen des Filterkuchens gesäubert werden. Hierzu dient eine separate Reinigungsanlage, die ggf. als Gegenspülanlage oder durch ein Freiblasen das Transportband säubert.

Erfindungsgemäß wird weiterhin ein Siebboden mit einer konvexen Wölbung oder Bombierung verwendet. Hierdurch wird das Vlies straff über die Wölbung gezogen, so daß es zu einer absolut sicheren Abdichtung im seitlichen Bereich zwischen Filtervlies und ungelochtem Randstreifen des Siebbodens kommt.

Ein vorteilhaftes und zweckmäßiges Ausführungsbeispiel der Erfindung ist in der Zeichnung dargestellt und in der nachfolgenden Beschreibung näher erläutert. Es zeigen

Fig. 1 eine Seitenansicht der erfindungsgemäßen Filteranlage mit zusätzlich angedeuteter Alternativausführung und

Fig. 2 eine Draufsicht der Anlage gemäß Fig. 1.

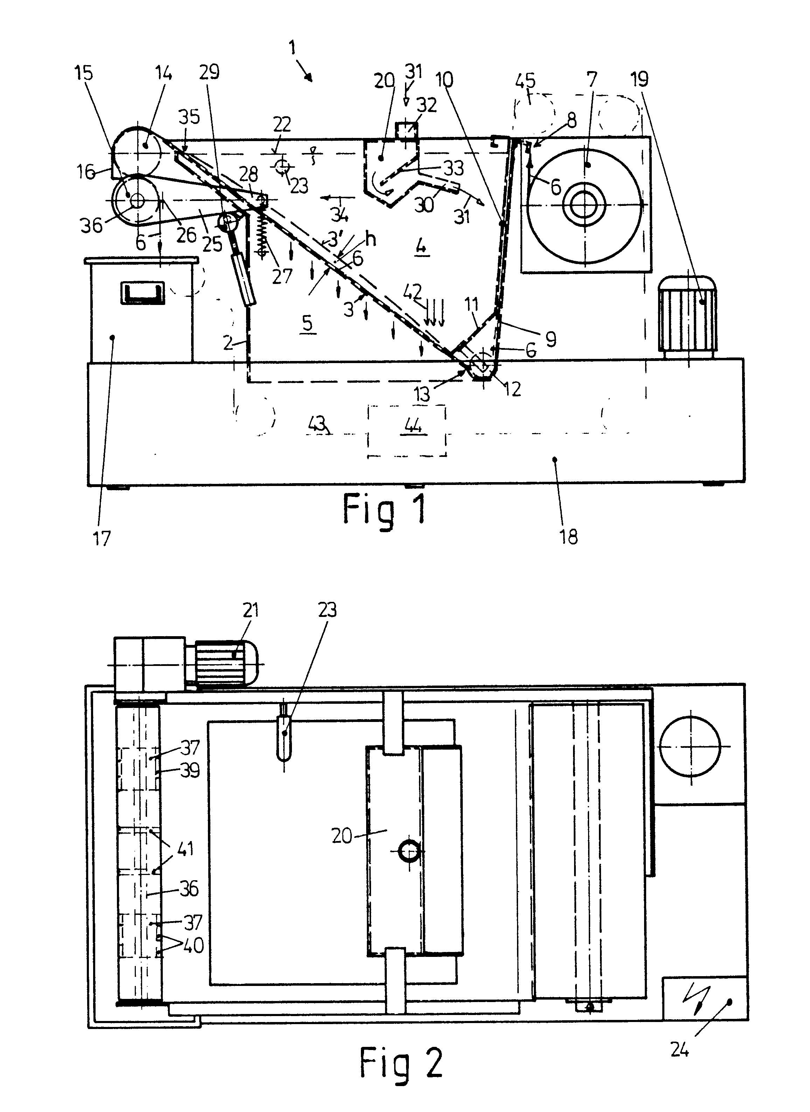

Die in der Fig. 1 in Seitenansicht, und in Fig. 2 in Draufsicht dargestellte Filteranlage (1) besteht aus einem nahezu im Querschnitt quadratischen Flüssigkeitsbehälter (2), der diagonal durch einen Lochsiebboden oder Spaltsiebboden, im weiteren Siebboden (3) genannt in den oberen Schmutzwasserbereich (4) und den unteren Reinwasserbereich (5) getrennt ist. Der Neigungswinkel oder Anstiegswinkel $\alpha$ des Siebbodens (3) beträgt $\alpha \approx 25$ bis $45°$, vorzugsweise $40°$. Das Filtervlies (6) besteht aus einem glasfaserverstärkten Filterpapiermaterial und wird von der Filtervliesrolle (7) über ein Umlenkblech (8) im Eingangsbereich der Filteranlage längs der in der Fig. 1 rechten Behälterwand (9) nach unten geführt. Hierzu ist ein herausnehmbares Einschubblech (10) vorgesehen, welches am unteren Ende einen abgewinkelten Bereich (11) aufweist, an dem die untere, erste Umlenkwalze (12) für das Filtervlies befestigt ist. Das Filtervlies (6) läuft um die Umlenkwalze (12) und wird über eine Auflagekante (13) auf den als Trägersieb dienenden Siebboden (3) straff und vollständig aufliegend geführt. Der Siebboden (3) hat eine Lochgröße von 10 bis 30 mm, vorzugsweise von 10 bis 15 mm und weist seitlich ca. 5 cm breite, geschlossene Auflagebereiche für das Filtervlies auf, um zu vermeiden, daß Flüssigkeit seitlich über das Filtervlies in den Reinwasserbereich einströmt.

Wie in Fig. 1 zusätzlich gestrichelt dargestellt, kann der Siebboden (3') in seiner Längsrichtung auch gewölbt oder bombiert ausgebildet sein. Dieser gewölbte Siebboden (3') bewirkt, daß das Filtervlies straff und eng anliegend über den flachen Rücken der Wölbung gezogen wird, so daß es beim Transport des darauf liegenden Filtervlieses stets an den gewölbten Siebboden angepreßt wird. Hierdurch ist eine absolut sichere Abdichtung des Filtervlieses auch im seitlichen Bereich zwischen Filtervlies und ungelochtem Randbereich gegeben. Die Stärke der Wölbung beträgt in der Mitte, d. h. im höchsten Bereich h $\approx$ 5 - 50 mm. Vorzugsweise wird diese Höhe h $\approx$ 15 mm betragen. Durch diese Maßnahme kann die Filtervliesführung und insbesondere die Abdichtung gegenüber dem Siebboden entscheidend verbessert werden.

Am oberen Ende des Siebbodens (3) ist das Filtervlies (6) über eine zweite Umlenkwalze (14) geführt, wobei durch die darunter liegende Andruck- und Antriebswalze (15) das Filtervlies (6) um mehr als $180°$ um die Umlenkwalze (14) geführt ist. Ein durch Eigengewicht gegen die Umlenkwalze (14) drückender Abstreifer (16) entfernt den Filterkuchen vom Filtervlies (6), bevor dieses zwischen Umlenkwalze (14) und Antriebswalze (15) geführt wird. Nach der Antriebswalze gelangt das Filtervlies (6) in den Schlammkasten (17). Unterhalb des Flüssigkeitsbehälters (2) ist der Reinwasser-Sammelbehälter (18) mit Reinwasserpumpe (19) vorgesehen.

Das schmutzige Kühlschmiermittel wird über einen Einlaufkasten (20) der Filteranlage zugeführt.

In der Draufsicht nach Fig. 2 ist darüber hinaus der Antriebsmotor (21) für die Antriebswalze (15) dargestellt.

Die obere und untere Stellung des Flüssigkeitsspiegels (22) wird durch einen Schwimmerschalter (23) geregelt. Ein Schaltkasten (24) dient zur Regelung der Filteranlage.

Wie aus Fig. 1 ersichtlich, ist die Andruck- und Antriebswalze (15) an einem Hebelsystem (25) mit Drehpunkt 26) gelagert. Eine Zugfeder (27) zieht den Hebelarm (28) über den Drehpunkt (26) nach unten, so daß eine Andruckkraft zwischen Umlenkwalze (14) und Andruck- bzw. Antriebswalze (15) von ca. 1000 N entsteht. Um ein neues Filtervlies einlegen zu können, ist ein Exzenterhebel (29) vorgesehen, der auf den Hebelarm (28) im Sinne einer Aufwärtsbewegung dieses Hebels einwirkt, so daß ein Öffnungsspalt zwischen der Umlenkwalze (14) und der Antriebswalze (15) sich einstellt.

Für die Erfindung ist es wesentlich, daß die Andruck- und Antriebswalze (15) unterhalb der Umlenkwalze (14) angeordnet ist, so daß sich eine Umschlingung von mehr als $180°$ des Filtervlieses ergibt. Außerdem wird das Filtervlies durch die unten gelegene Antriebswalze stets auf Zug beansprucht.

Das Einschubblech (10) ist in nicht näher dargestellten seitlichen Führungsschienen an der Behälterwand geführt und drückt über die untere Umlenkwalze das Filtervlies in die unterste Lage des Flüssigkeitsbehälters. Zum Wechseln des Filtervlieses wird das Einschubblech (10) nach oben herausgezogen, so daß das Filtervlies lose im Schmutzwasserbereich (4) des Flüssigkeitsbehälters (2) zu liegen kommt.

Das Einschubblech (10) dient weiterhin als Prallblech für das aus dem Auslauf (30) ausströmende Kühlschmiermittel (31). Diese mit hoher Geschwindigkeit anströmende Kühlschmierflüssigkeit (31) gelangt über den Einfüllstutzen (32) in den Einlaufkasten (20) und wird dort über Umlenkbleche (33) in der Geschwindigkeit abgebremst. Der Auslauftrichter (30) muß gegen das als Prallblech ausgebildete Einschubblech (10) gerichtet sein, damit sich eine Umkehr der Strömung der Flüssigkeit in Richtung zum Austragsbereich des Filtervlieses ergibt (Pfeil 34). Hierdurch werden Schwebstoffe, die nicht in der Flüssigkeit auf den Filterkuchen absinken in Austragsrichtung transportiert und können spätestens im Austrittsbereich (35) des Filtervlieses aus der Flüssigkeit sich am Filterkuchen durch Adhäsionskräfte anlagern.

Die Antriebswalze (15) besteht aus einer mit dem Getriebemotor (21) verbundenen Antriebswelle (36), auf die seitlich zwei profilierte Antriebsrollen (37) aufgesetzt sind. Je nach Breite des Flüssigkeitsbehälters (2) können noch ein oder mehrere zusätzliche Antriebsrollen (37) vorgesehen sein.

Die Antriebsrollen (37) weisen eine profilierte Oberfläche (39) mit axial verlaufenden taschenförmigen, im Querschnitt trapezförmigen oder konischen Ausnehmungen (40) auf. Die Oberfläche besteht aus einem ölbeständigen weichen Gummi mit einer Härte von ca. 70 Schore, so daß eine gute Kraftübertragung zur Umlenkwalze (14) gegeben ist.

Zwischen den Antriebsrollen (37) der Antriebswalze (15) sind Stützscheiben (41) zur Abstützung des darüber liegenden Filtervlieses vorgesehen.

Der Flüssigkeitsspiegel (22) wird durch den Schwimmerschalter (23) geregelt. Mit wachsender Stärke des Filterkuchens auf dem Filtervlies (6) wird die Filterwirkung größer, jedoch die Durchlässigkeit für Flüssigkeit kleiner, so daß der Flüssigkeitsspiegel (22) langsam ansteigt. Ist der Flüssigkeitsspiegel an der obersten gewünschten Grenze angelangt, so schaltet der Schwimmerschalter (23) die Antriebswalze (15) mittels des Getriebemotors (21) ein, so daß das Filtervlies (6) von der Filtervliesrolle (7) über die erste Umlenkwalze (12) und zweite Umlenkwalze (14) in den Schlammkasten (17) gezogen wird. Auf den untersten Bereich des Siebbodens (3) gelangt damit einige Zentimeter neues Filtervlies, das eine wesentlich höhere Durchlässigkeit hat als das übrige, mit Filterkuchen besetzte Filtervlies. Bevorzugt in diesem Bereich (Pfeile 42) tritt dann eine starke Flüssigkeitsströmung auf, die ein Absinken des Flüssigkeitsspiegels bis zu einer unteren, durch den Schwimmer (23) geregelten Stellung bewirkt. Sodann kann der Flüssigkeitsspiegel wieder langsam ansteigen.

Ein Neueinlegen des Filtervlieses geschieht wie folgt:

Eine neue Filtervliesrolle (7) wird eingelegt und das Filtervlies nach Entfernung des Einschubblechs (10) einschließlich der unteren Umlenkwalze (12) unterhalb des Einlaufkastens (20) bis zur zweiten Umlenkwalze (14) geführt. Sodann wird das Einschublech (10) in die entsprechenden Seitenführungen eingesetzt und die erste Umlenkwalze (12) drückt das Filtervlies bis in den unteren Eckbereich des Flüssigkeitsbehälters (2). Durch Betätigung des Exzenterhebels (29) kann dann die Andruckwalze (15) von der Umlenkwalze (14) abgehoben und das Filtervliesende dazwischen geschoben werden.

In alternativer Ausbildung der Erfindung kann das Filtervlies (6) auch als endloses, umlaufendes Transportband verwendet werden. Dies ist symbolisch durch eine punktierte Linie (43) angedeutet. In einer separaten Reinigungseinrichtung (44) muß dann dieses Transportband vom restlichen Filterkuchen gereinigt werden. Dies kann durch eine Gegenströmanlage oder durch Ausblasen geschehen. Da das Transportband, zum Beispiel aus Dralon oder Perlon, im Flüssigkeitsbehälter (2) und auf dem Siebboden (3, 3′) zwischen den Walzen (12 und 14) stramm geführt ist, ist eine zusätzliche Spannrolle (45) im Einlaufbereich des Vlieses zum Flüssigkeitsbehälter an sich nicht notwendig, kann jedoch als Umlenkrolle (45) vorgesehen sein.

Für spezielle Anwendungsfälle, insbesondere bei vorwiegendem Späneanfall, sieht die Erfindung eine besondere Regelung des Transports des Filtervlieses bzw. des Transportbandes (6) vor. Durch den vorwiegenden Späneanfall stellt sich kein oder nur ein unwesentlicher Anstieg des Flüssigkeitsspiegels ein, trotz zunehmender Verschmutzung der Kühlschmierflüssigkeit. Über ein einstellbares Zeitrelais ist eine Intervallschaltung mit einem selbständigen kurzzeitigen Bandvorschub vorgesehen. Hierdurch wird dann der Filtervliestransport nicht in Abhängigkeit eines Schwimmerschalters sondern in Zeitabhängigkeit geregelt. Diese Intervallschaltung kann bei Bedarf durch einen Wahlschalter stillgelegt werden oder auf die Schwimmerschaltung umgeschaltet werden.

Für eine gute Filterwirkung ist die Höhe des Flüssigkeitsspiegels maßgebend. Das Filtervlies wirkt demnach im wesentlichen im unteren Bereich des Siebbodens (3), wo eine Flüssigkeitshöhe von wenigstens 50 cm und mehr stets erreicht ist.

## Ansprüche

1. Filteranlage zur Reinigung von Kühlschmiermitteln, mit einem Flüssigkeitsbehälter, der in Austragsrichtung einen vom Boden des Behälters schräg nach oben führenden Lochsieb- oder Spaltsiebboden aufweist, auf welchem ein Filtervlies zur Ablagerung eines Filterkuchens o. dgl. eben aufliegt, mit einer am unteren Ende des schrägen Siebbodens angeordneten ersten Umlenkwalze und mit einer am oberen Austragsende der Filteranlage angeordneten zweiten Umlenkwalze, die vom Filtervlies um ca. 180° umschlungen ist und mit einer darunter liegenden Andruckwalze sowie mit einem Antrieb für das Filtervlies, dadurch gekennzeichnet, daß der Siebboden (3) einen Anstiegswinkel von $\alpha \approx$ 25 bis 45°, vorzugsweise von ca. 40° und der Flüssigkeitsspiegel (22) des Schmutzwassers (4) zur Bildung eines hydrostatischen Drucks im wirksamen Filterbereich eine Höhe von H = 50 cm aufweist.

2. Filteranlage nach Anspruch 1, dadurch gekennzeichnet, daß die am oberen Austragsende der Filteranlage (1) angeordnete zweite Umlenkwalze (14) als sich über die ganze Breite des Filtervlieses (6) erstreckende geriffelte Umlenkwalze (14) ausgebildet ist, die von der darunter liegenden Andruck- und Antriebswalze (15) antreibbar ist.

3. Filteranlage nach Anspruch 1 oder 2, dadurch gekennzeichnet, daß die Andruck- und Antriebswalze (15) einen seitlich angeflanschten Getriebemotor (21) aufweist, der eine Antriebswelle (36) antreibt, die wenigstens zwei profilierte Antriebsrollen (37) aus ölresistentem Material trägt, wobei zwischen den Antriebsrollen (37) Stützscheiben (41) für das Filtervlies (6) vorgesehen sind.

4. Filteranlage nach Anspruch 2 oder 3, dadurch gekennzeichnet, daß die Profilierung der Antriebsrollen (37) in axialer Richtung taschenförmig (40) und durch ein konisches Profil selbstreinigend ausgebildet ist und aus einem ölresistentem Gummi mit geringer Härte besteht.

5. Filteranlage nach Anspruch 2 oder 3, dadurch gekennzeichnet, daß die Andruck- und Antriebswalze (15) an einem federbeaufschlagten Hebelsystem (25) gelagert ist, mit einer Anpreßkraft gegenüber der Umlenkwalze (14) von ca. 1000 N und daß an dem Hebelsystem ein Exzenterhebel (29) angreift, der gegen die Anpreßkraft wirkt, zur Herstellung eines Öffnungsspalts zwischen Umlenkwalze (14) und Andruckwalze (15).

6. Filteranlage nach Anspruch 1, dadurch gekennzeichnet, daß die erste, untere Umlenkwalze (12) an einem nahezu senkrecht verlaufenden Einschubblech (10) mit unterer Abwinklung (11) befestigt ist und daß eine Dichtlippe (46) aus Teflon o. dgl. am unteren Ende des Einschubblechs (10) auf das Filtervlies (6) bzw. dem Lochblech oder Spaltsieb (3) aufliegt.

7. Filteranlage nach Anspruch 1 oder 6, dadurch gekennzeichnet, daß der Einlauf des Schmutzwassers über einen Einlaufkasten (20) erfolgt, dessen Auslauf (30) gegen die vordere Behälterwand (10) insbesondere gegen das als Prallblech ausgebildete Einschubblech (10) gerichtet ist, zur Vermeidung von Turbulenzen und zur Erzeugung einer geringen Strömung in Austragsrichtung der Filteranlage (Pfeil 34).

8. Filteranlage nach Anspruch 7, dadurch gekennzeichnet, daß der Einlaufkasten (20) im Inneren Umlenkbleche (33) zur Reduzierung der Strömungsgeschwindigkeit aufweist.

9. Filteranlage insbesondere nach einem oder mehreren der vorhergehenden Ansprüche, dadurch gekennzeichnet, daß anstelle eines Filtervlieses (6) ein endlos umlaufendes Transportband (43) aus Kunststoff, insbesondere Perlon, Dralon o. dgl. mit einer Flüssigkeitsdurchlässigkeit vorgesehen ist, welches außerhalb des Flüssigkeitsbehälters (3) einer Reinigungseinrichtung (44) zuführbar ist.

10. Filteranlage nach Anspruch 9, dadurch gekennzeichnet. daß als Reinigungseinrichtung (44) für das Transportband (43) eine Gegenstrom-Flüssigkeitsspülung oder eine Freiblaseinrichtung vorgesehen sind.

11. Filteranlage insbesondere nach einem oder mehreren der vorhergehenden Ansprüche, dadurch gekennzeichnet, daß der Siebboden (3') in seiner Längsrichtung eine Konvex-Wölbung (3')

(Bombierung) aufweist, wobei die Höhe (h) der Wölbung im mittleren höchsten Bereich ca. $h \approx 5 - 50$ mm, insbesondere $h \approx 15$ mm, beträgt.

12. Filteranlage nach Anspruch 11, dadurch gekennzeichnet, daß der Siebboden in seinem seitlichen Randbereich eine ungelochte Randzone zur Filtervliesabdichtung aufweist.

Fig 1

Fig 2

Europäisches Patentamt

**EUROPÄISCHER RECHERCHENBERICHT**

Nummer der Anmeldung

EP 88 11 5055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 102 528 (FAIRCHILD INC.) <br> * Zusammenfassung; Seite 3, Zeilen 20-21; Seite 3, Zeilen 32-37; Seite 5, Zeilen 26-33; Seite 8, Zeilen 2-11; Abbildungen 1,2 * <br> --- | 1-3,5,9 ,12 | B 01 D 33/04 <br> B 01 D 29/02 |
| A,D | DE-U-8 135 658 (SACK GmbH) <br> * Ansprüche 1-4,6; Seite 1, Zeilen 8-16; Seite 2, vorletzter Absatz - Seite 3, Absatz 3; Seite 4, Zeilen 8-30; Abbildungen 1,2 * <br> --- | 1-3,11 | |
| A | US-A-4 481 108 (J.R. BRATTEN) <br> * Spalte 1, Zeilen 5-8; Spalte 1, Zeile 61 - Spalte 2, Zeile 48; Abbildungen 1-3 * <br> --- | 1-3 | |
| A | GB-A-1 075 740 (G. HIRS) <br> * Seite 2, Zeilen 10-60; Seite 3, Zeilen 7-30; Abbildungen 1-3 * <br> --- | 1-3,9 | |
| A | FR-A-1 331 676 (TECHNICON INSTRUMENTS CORP.) <br> * Seite 1, linke Spalte, Zeilen 3-11; Seite 2, linke Spalte, Absatz 2; Seite 2, rechte Spalte, Absatz 2; Abbildungen 1-3 * <br> ----- | 2,3,5 | **RECHERCHIERTE SACHGEBIETE (Int. Cl.4)** <br><br> B 01 D |

Der vorliegende Recherchenbericht wurde für alle Patentansprüche erstellt

| Recherchenort | Abschlußdatum der Recherche | Prüfer |
|---|---|---|
| DEN HAAG | 05-01-1989 | MARZENKE J. |